Europäisches Patentamt

European Patent Office

Office européen des brevets

(19)

(11)  EP 0 692 883 B1

(12)  FASCICULE DE BREVET EUROPEEN

(45) Date de publication et mention
de la délivrance du brevet:
**13.02.2002  Bulletin 2002/07**

(51) Int Cl.⁷: **H04B 3/21**, G10L 11/00

(21) Numéro de dépôt: **95401661.4**

(22) Date de dépôt: **10.07.1995**

(54) **Procédé d'égalisation aveugle et son application à la reconnaissance de la parole**

Verfahren zur blinden Entzerrung, und dessen Anwendung zur Spracherkennung

Blind equalisation method, and its application to speech recognition

(84) Etats contractants désignés:
**BE DE ES GB IT SE**

(30) Priorité:  **13.07.1994  FR 9408741**

(43) Date de publication de la demande:
**17.01.1996  Bulletin 1996/03**

(73) Titulaire: **FRANCE TELECOM**
**75015 Paris (FR)**

(72) Inventeurs:
• **Mokbel, Chafic**
**F-22300 Lannion (FR)**
• **Jouvet, Denis**
**F-22300 Lannion (FR)**
• **Monne, Jean**
**F-22700 Ploumanach (FR)**

(74) Mandataire: **Fréchède, Michel et al**
**Cabinet Plasseraud 84, rue d'Amsterdam**
**F-75440 Paris Cédex 09 (FR)**

(56) Documents cités:
**DE-A- 3 431 141**

• **DIGITAL SIGNAL PROCESSING, APRIL 1991,
USA, vol. 1, no. 2, ISSN 1051-2004, pages 66-88,
XP 000393607 PREUSS R D 'Autoregressive
spectral estimation in noise with reference to
speech analysis'**
• **IEEE TRANSACTIONS ON SIGNAL
PROCESSING, vol. 41, no. 2, NEW YORK US,
pages 926-930, XP 000346033 YASUKAWA H ET
AL 'An acoustic echo canceller using subband
sampling and decorrelation methods'**
• **IEEE SIGNAL PROCESSING MAGAZINE, JAN.
1992, USA, vol. 9, no. 1, ISSN 1053-5888, pages
14-37, XP 000436314 SHYNK J J
'Frequency-domain and multirate adaptive
filtering'**

## Description

L'invention concerne un procédé et un système de filtrage adaptatif par égalisation aveugle d'un signal téléphonique numérique et leur application à la transmission téléphonique et/ou la reconnaissance automatique de la parole.

Dans les systèmes de reconnaissance automatique de la parole, la difficulté principale d'une reconnaissance efficace est due aux variations qui apparaissent dans le signal acoustique numérique qui véhicule la parole. Les sources de variation sont nombreuses et l'on distingue habituellement la variabilité intrinsèque de la variabilité extrinsèque au locuteur. En effet, les réalisations ou matérialisations acoustiques d'un même mot diffèrent, par exemple, selon l'état du locuteur ou le contexte du mot dans la phrase. Cette différence s'accentue encore si l'on compare les réalisations acoustiques provenant de plusieurs locuteurs.

Les réalisations acoustiques des mots sont des ondes acoustiques, ondes de pression, qui doivent être captées pour être reconnues. Lors de l'acquisition d'une onde de parole au moyen d'un microphone, diverses perturbations viennent s'ajouter à celle-ci, en augmentant la variabilité du signal ainsi engendré. Le bruit ambiant est lui aussi une onde acoustique, captée par le microphone et mélangée additivement à l'onde de parole initiale.

Par ailleurs, dans le cas, notamment, d'applications de reconnaissance de la parole à travers le réseau téléphonique, le module d'acquisition formé par le microphone du combiné téléphonique et par les lignes téléphoniques liant l'utilisateur au système de reconnaissance agissent comme un filtre de convolution linéaire, lentement variable dans le temps.

Pour un combiné téléphonique de type classique, ne fonctionnant pas en mode mains-libres, les effets du bruit ambiant sont négligeables, mais les effets convolutifs des lignes de transmission sont prépondérants. Ainsi, chaque signal observé à l'entrée du système de reconnaissance automatique de la parole contient une composante convolutive, sensiblement constante pour un appel donné, mais susceptible de varier d'un appel à l'autre.

Cette composante convolutive est nuisible à la reconnaissance de la parole. Une représentation de cette composante dans l'espace cepstral montre qu'un filtre convolutif, qui représente le canal de transmission, se tranforme en un biais (composante continue presque constante) s'ajoutant aux vecteurs cepstraux. Ce biais change d'un appel à l'autre.

En relation avec la figure la, on rappelle que les vecteurs cepstraux, en représentation cepstrale, sont obtenus de la façon ci-après, le signal numérique de parole s(n) étant transformé en une suite de vecteurs dont les paramètres sont calculés sur des fenêtres généralement de longueur fixe (10 à 40 ms) qui se recouvrent par :

- calcul du spectre du signal sur chaque fenêtre par transformée fréquentielle de type transformée de Fourier rapide, FFT,
- calcul du logarithme de l'énergie spectrale,
- calcul du vecteur cepstral, formé de coefficients cepstraux, par transformée fréquentielle inverse $FFT^{-1}$ du logarithme de l'énergie spectrale.

Les coefficients cepstraux permettent de représenter la réponse impulsionnelle du canal vocal et portent donc l'information pertinente pour la reconnaissance de la parole. En outre, ces coefficients sont insensibles à l'énergie du signal d'entrée, ce qui permet de réduire en conséquence la variabilité du signal soumis à reconnaissance.

Compte tenu de ce biais, composante continue, les vecteurs cepstraux, correspondant à une réalité acoustique unique, occupent cependant un domaine plus large de l'espace de représentation cepstrale, ce qui, bien entendu, a pour effet de diminuer le pouvoir discriminant de ces vecteurs et implique la mise en oeuvre de modèles complexes susceptibles de permettre une discrimination efficace entre les différentes formes du vocabulaire de l'application considérée. Pour une description plus détaillée du problème posé, on pourra utilement se reporter à l'article publié par C. MOKBEL, J.MONNÉ et D.JOUVET, intitulé *"On-Line Adaptation of a Speech Recognizer to Variations in Telephone Line Conditions"* ; EUROSPEECH pp. 1247-1250, Berlin 1993.

Compte tenu de l'exposé précédent, il apparaît nécessaire de réduire au maximum les effets des lignes téléphoniques sur un signal observé, afin d'améliorer les performances en reconnaissance, pour un système donné.

Le problème posé est un problème de déconvolution aveugle, car, contrairement aux problèmes connus d'annulation d'écho acoustique, de déréverbération et/ou de filtrage d'antenne, cas dans lesquels on dispose de plusieurs capteurs acheminant une plus grande quantité d'information, un seul capteur microphonique est disponible dans le cas présent.

Bien que la solution au problème posé puisse donc se ramener à un processus de déconvolution, le signal de parole, ou signal téléphonique numérique, et la fonction de transfert du canal occupent les mêmes zones de fréquences et présentent un domaine commun dans l'espace cepstral, et il est donc très difficile de définir des filtres ou "*liftres*", effectuant une pondération ou un filtrage dans l'espace cepstral, permettant de réaliser le processus de déconvolution recherché.

Les solutions techniques actuellement connues au problème précité ont jusqu'à ce jour eu pour objet, soit d'améliorer la robustesse des processus de reconnaissance automatique de la parole aux conditions d'acquisition du signal téléphonique, soit la réduction des perturbations dans un signal téléphonique, afin d'améliorer l'intelligibilité de celui-ci.

Dans les systèmes de reconnaissance automatique de la parole, lorsque la reconnaissance est effectuée en local pour la commande vocale des téléphones mains-libres des ordinateurs ou autres, les techniques, visant à réduire les perturbations introduites par le bruit additif, couvrent le filtrage par soustraction spectrale, le filtrage d'antenne, le filtrage par état des modèles de Markov, ou l'ajout en ligne du bruit ambiant sur le signal et modèles de référence.

Pour la reconnaissance centralisée, les techniques ont également pour objet la réduction des effets des lignes téléphoniques, par soustraction aux vecteurs cepstraux de leur composante continue estimée sur un horizon suffisamment large. On rappelle que la notion d'horizon désigne, pour un signal téléphonique numérique subdivisé en fenêtres, un nombre entier déterminé de fenêtres successives. Pour une description plus détaillée de ce type d'approche, on pourra utilement se reporter à l'article précédemment cité. Pour un horizon assez large, on constate que la moyenne des vecteurs cepstraux représente les effets des lignes téléphoniques, cette constatation étant d'autant mieux vérifiée que les changements des caractéristiques du canal sont lents.

Pour un processus de déconvolution général, deux grands types de déconvolution sont mis en oeuvre, la déconvolution aveugle, basée sur des propriétés spectrales ou cepstrales, sinon temporelles, du signal soumis à déconvolution. Dans le domaine des télécommunications, les algorithmes d'égalisation adaptative s'apparentent à un processus de déconvolution aveugle (confer par exemple l'article de A.BENVENISTE et M.GOURSAT *"Blind Equalizers",* "IEEE TRANSACTIONS ON COMMUNICATIONS", Vol. COM-32, No.8, August 1984, pp.871-833, 1984). Le second type de déconvolution, utilisé par exemple dans les algorithmes d'annulation d'écho ou de déréverbération, met en oeuvre un filtrage adaptatif, ou un filtrage spatial dans le cas d'antennes acoustiques. Pour une description plus détaillée de ce type de traitement, on pourra utilement se reporter à l'article intitulé *"Adaptive Noise Cancelling : Principles and Applications",* PROCEEDINGS OF THE IEEE, Vol.63, No.12, Dec.1975, pp.1692-1716, 1975, publié par B.WIDROW et al, au document DE-A-34 31 141, ainsi qu'à l'article de H.YASUKAWA ET AL « An acoustic echo canceller using subband sampling and decorrelation methods », « IEEE Transactions on Signal Processing », Vol.41, No.2, Fév.19993, pp.926-930.

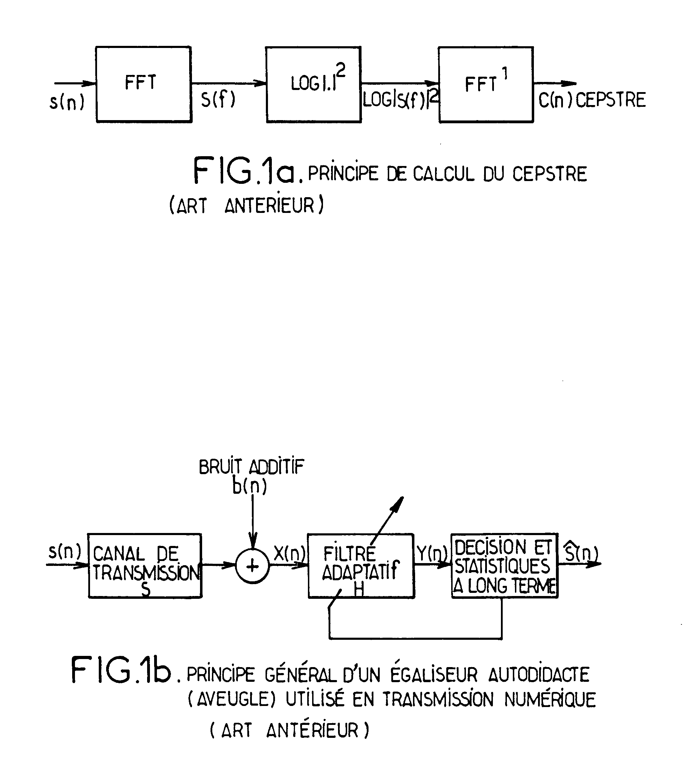

Enfin, dans le domaine des transmissions de signaux numériques, les problèmes posés par le processus d'égalisation sont semblables, en raison du fait qu'il est difficile de disposer d'une référence propre afin d'utiliser un schéma classique de filtrage adaptatif, pour annuler l'effet du canal de transmission, car l'unique signal dont on dispose est le signal numérique observé, déjà transmis. Afin de rendre la tâche plus facile, des séquences numériques connues du récepteur peuvent certes être émises, afin d'identifier la fonction de transfert du canal de transmission. Cependant, un tel processus sature rapidement la capacité de transmission du canal. Afin de remédier à l'inconvénient précité, un ensemble d'études visant à définir un schéma d'égalisation aveugle a été effectué. La solution retenue consiste à utiliser une logique de décision et des statistiques à long terme connues, sur le signal numérique transmis, afin de calculer l'erreur servant à l'adaptation des coefficients d'un filtre adaptatif à descente de gradient stochastique, ainsi qu'illustré schématiquement sur la figure 1b. Pour une description plus détaillée de ce type de traitement, on pourra se reporter à l'article intitulé *"Frequency-Domain and Multirate Adaptive Filtering",* IEEE Signal Processing Magazine, pp.15-37, Jan.1992, publié par JJ.SHYNK. La présente invention a pour but de remédier aux inconvénients des méthodes antérieures précitées, par la mise en oeuvre d'un procédé et d'un système de filtrage adaptatif par égalisation aveugle d'un signal téléphonique numérique, plus particulièrement destiné à des applications de reconnaissance automatique de la parole, à travers le réseau téléphonique commuté.

Le procédé de filtrage adaptatif d'un signal téléphonique numérique, objet de la présente invention, est remarquable en ce qu'il consiste à soumettre le signal téléphonique numérique à une transformation fréquentielle, de type FFT, et à un filtrage en sous-bandes pour engendrer une pluralité de signaux en sous-bandes. Chacun des signaux en sous-bandes est soumis à un filtrage adaptatif, à partir d'un signal de référence, basé sur des statistiques à long terme sur le signal téléphonique, ce qui permet d'effectuer une égalisation par déconvolution aveugle des effets des lignes téléphoniques de transmission sur le signal téléphonique numérique.

Le système de filtrage adaptatif d'un signal téléphonique numérique, objet de la présente invention, est remarquable en ce qu'il comporte un circuit de transformation fréquentielle par traitement FFT et un circuit de filtrage en sous-bandes pour engendrer une pluralité de signaux en sous-bandes, à partir du signal téléphonique numérique. Un circuit générateur d'un signal de référence permet d'engendrer un signal de référence basé sur des statistiques à long terme sur le signal téléphonique et un circuit de filtrage adaptatif de chacun des signaux en sous-bandes à partir du signal de référence permet d'engendrer des signaux en sous-bandes filtrés, ce qui permet d'effectuer une égalisation par déconvolution aveugle des effets des lignes téléphoniques de transmission sur le signal téléphonique numérique.

Le procédé et le système de filtrage adaptatif par égalisation aveugle d'un signal téléphonique numérique, objets de la présente invention, trouvent application à l'amélioration des processus de reconnaissance automatique de la parole et/ou de la qualité de restitution, après transmission, des signaux téléphoniques numériques.

Ils seront mieux compris à la lecture de la description et à l'observation des dessins ci-après, dans lesquels, outre les figures la et 1b relatives à l'art antérieur,

- la figure 2 représente, sous forme de schéma synoptique, un organigramme de procédé de filtrage adaptatif par égalisation aveugle d'un signal téléphonique numérique et leurs applications,
- la figure 3a représente un schéma fonctionnel du dispositif de filtrage adaptatif par égalisation aveugle d'un signal téléphonique numérique, objet de la présente invention,
- la figure 3b représente un détail de réalisation du dispositif de la figure 3a, dans un mode de réalisation particulier non limitatif,
- la figure 3c représente un détail de réalisation du dispositif représenté en figure 3b.

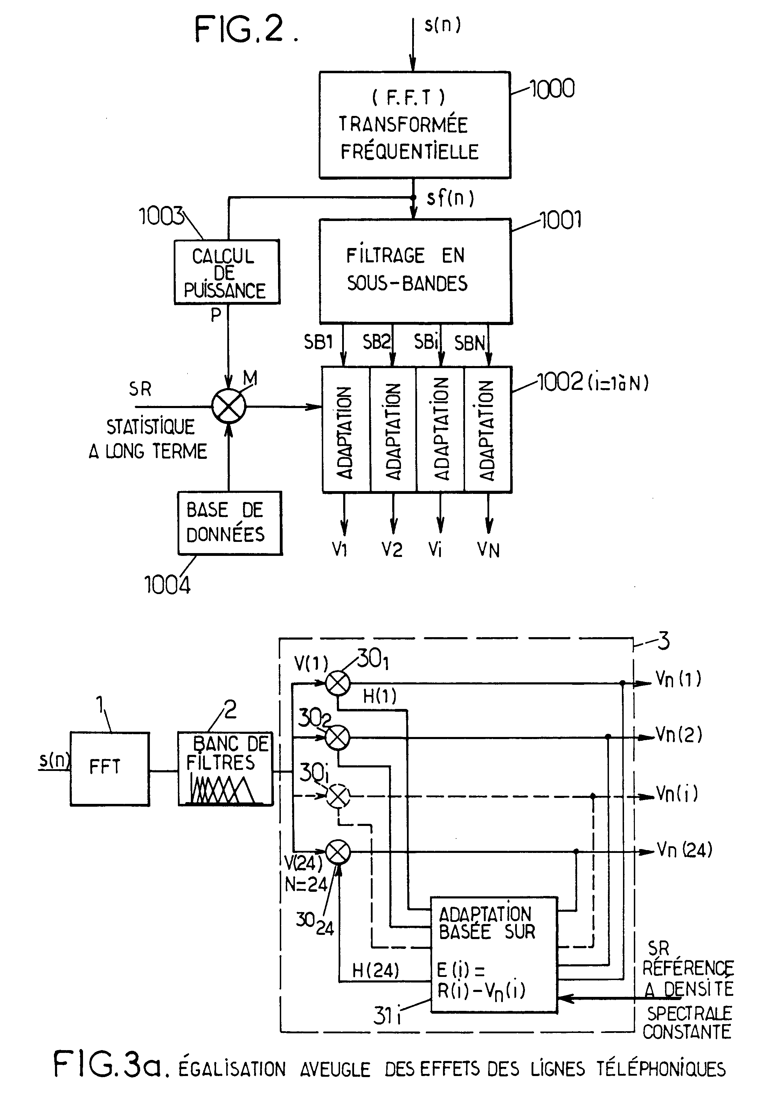

Une description plus détaillée du procédé de filtrage adaptatif d'un signal téléphonique numérique, objet de la présente invention, sera maintenant donnée en liaison avec la figure 2.

D'une manière générale, on indique que le signal téléphonique numérique transmis, noté s(n), est formé par une suite d'échantillons codés numériquement.

Selon un aspect particulièrement avantageux du procédé, objet de la présente invention, celui-ci consiste à soumettre le signal numérique s(n) à une transformation fréquentielle de type transformée de Fourier, et en particulier de type transformée de Fourier rapide FFT, à une étape notée 1000 sur la figure 2 précitée. D'une manière générale, on indique que la tranformation fréquentielle est effectuée à partir des échantillons numériques précités, ces échantillons étant regroupés en fenêtres d'échantillons successifs, ces fenêtres comportant un nombre d'échantillons déterminé et deux fenêtres successives procédant à un recouvrement sur un ou plusieurs échantillons communs. Les processus de traitement par transformation fréquentielle sont des processus connus de même que les processus de traitement par transformée de Fourier rapide et, à ce titre, ces derniers ne seront pas décrits en détail.

Selon un autre aspect du procédé, objet de la présente invention, celui-ci consiste en une étape 1001 à soumettre le signal numérique transformé par la transformation fréquentielle précitée, ce signal transformé étant noté sf(n), à un processus de filtrage en sous-bandes, noté 1001 sur la figure 2, pour engendrer une pluralité de signaux en sous-bandes, ces signaux étant notés $SB_1$, $SB_2$, ... $SB_i$ à $SB_N$. D'une manière classique, on comprend que le filtrage en sous-bandes permet à partir du signal numérique transformé sf(n) d'obtenir pour chacun des signaux en sous-bandes des composantes de fréquence dans chaque sous-bande de valeur déterminée. Par sous-bande de valeur déterminée, on entend une sous-bande de fréquence présentant une fréquence centrale et une largeur de bande déterminée. On comprend que le filtrage en sous-bandes peut être réalisé de façon à répartir le signal transformé sf(n) en bandes sensiblement adjacentes pouvant présenter un certain recouvrement de fréquences.

Suite au traitement de filtrage en sous-bandes, noté 1001 sur la figure 2, conformément à un aspect particulièrement avantageux du procédé, objet de la présente invention, chacun des signaux en sous-bande $SB_1$, $SB_i$ à $SB_N$ est alors soumis à un filtrage adaptatif correspondant, noté $1002_1$ à $1002_N$, à partir d'un signal de référence SR basé sur des statistiques à long terme sur le signal téléphonique transmis.

On indique qu'un tel mode opératoire permet d'effectuer une égalisation par déconvolution aveugle des effets des lignes téléphoniques de transmission sur le signal téléphonique numérique s(n).

De plus, le procédé de filtrage adaptatif, objet de la présente invention, consiste en outre à soumettre le signal de référence SR à une modulation, à l'étape 1003, de type modulation de puissance P en fonction de la puissance du signal téléphonique numérique reçu s(n). D'une manière générale, on indique que le calcul de la puissance du signal téléphonique numérique s(n) peut avantageusement être effectué, ainsi qu'il sera décrit de manière plus détaillée ultérieurement dans la description, à partir du signal transformé sf(n) ainsi que représenté de manière illustrative sur la figure 2. La modulation de puissance du signal de référence peut alors être effectuée par l'intermédiaire d'une modulation M, ainsi que représenté sur la figure 2 précitée.

D'une manière générale, on indique que le signal de référence SR peut être un signal à densité spectrale constante et qu'en outre, ce signal peut être modulé en une étape 1004 par un signal numérique engendré par une base de données spécifique au type de communications véhiculées par le signal téléphonique numérique. Bien entendu, la modulation peut être effectuée à l'étape de modulation M précédemment mentionnée en liaison avec la figure 2.

Une description plus détaillée d'un système de filtrage adaptatif d'un signal téléphonique numérique conforme à l'objet de la présente invention, permettant notamment la mise en oeuvre du procédé de filtrage tel que précédemment décrit en liaison avec la figure 2, sera maintenant donnée en liaison avec la figure 3a.

Selon la figure précitée, on indique que le système, objet de la présente invention, comporte un circuit 1 de transformation fréquentielle par traitement FFT précédemment cité, et un circuit 2 de filtrage en sous-bandes pour engendrer une pluralité de signaux en sous-bandes à partir du signal téléphonique numérique s(n), ainsi que décrit précédemment dans la description. D'une manière générale, on indique que le circuit de traitement par transformée de Fourier rapide FFT est un circuit de type classique, de type papillon par exemple, permettant d'assurer le traitement sur les fenêtres de pondération du signal d'entrée s(n).

En ce qui concerne le circuit 2 de filtrage en sous-bandes, on indique que celui-ci peut être réalisé par un banc de filtres dont les fonctions de transfert par rapport à la fréquence centrale et en particulier la largeur de bandes par rapport à cette fréquence centrale, permet d'effectuer un certain recouvrement des bandes de fréquence précitées. Les techniques classiques de calcul de filtres peuvent être utilisées pour réaliser le banc de filtres constituant le circuit de filtrage en sous-bandes 2 tel que représenté en figure 3a.

De manière classique, on indique que chaque banc de filtres délivre un signal de type numérique, ces signaux, désignés par signaux élémentaires, étant référencés V(1) à V(N) où N désigne le nombre de sous-bandes et donc de bancs de filtres constitutifs du circuit de filtrage en sous-bandes 2.

Dans une réalisation pratique, on indique que le nombre N de sous-bandes et donc le nombre de signaux élémentaires a été pris égal à N = 24.

En sortie du circuit de filtrage en sous-bandes 2, le système, objet de la présente invention, comprend un circuit 3 de filtrage adaptatif de chacun des signaux en sous-bandes V(1), ... V(i), ... V(N). Le filtrage adaptatif est réalisé à partir du signal de référence SR. Le circuit de filtrage adaptatif 3 comporte, pour chacun des signaux élémentaires, une voie de filtrage adaptatif réalisée de la façon ci-après.

Un circuit multiplicateur (atténuateur) $30_i$ reçoit sur une première entrée l'un des signaux élémentaires V(i) et, sur une autre entrée, une valeur d'adaptation H(i), c'est-à-dire de pondération, notée H(1) à H(N). La sortie de chaque élément multiplicateur, $30_i$, délivre un signal élémentaire filtré, noté $V_n(1)$ à $V_n(i)$, $V_n(N)$. La sortie de chaque élément multiplicateur $30_i$ précédemment citée est rebouclée sur la deuxième entrée recevant le paramètre d'atténuation ou de filtrage H(i) par l'intermédiaire d'un module d'adaptation, noté $31_i$, un seul module d'adaptation étant représenté sur la figure 3a afin de ne pas surcharger le dessin. On comprend toutefois que chaque module d'adaptation $31_i$ réalise une adaptation basée sur un critère d'erreur, une erreur correspondante pour le signal élémentaire de rang i étant définie par la relation :

$$Err(i) = R(i) - V_n(i).$$

Dans la relation précitée, on indique que l'expression R(i) désigne le signal de référence pour le signal élémentaire V(i) correspondant.

Un justificatif du mode opératoire du procédé, objet de la présente invention, tel que représenté en figure 2 et du système de filtrage tel que représenté en figure 3a, sera maintenant donné ci-après dans la description.

Dans l'application du procédé et du dispositif, objets de la présente invention, à la reconnaissance automatique de la parole à travers le réseau téléphonique, on ne dispose bien entendu que d'un seul microphone, celui du combiné téléphonique.

L'algorithme d'égalisation aveugle, basé sur le critère d'erreur précédemment mentionné, permet de mettre en oeuvre un schéma de filtrage adaptatif pour réduire, ou égaliser, les effets des lignes téléphoniques dans un signal de parole observé à l'entrée d'un système de reconnaissance centralisé. Le mode opératoire des modules d'adaptation, tels que les modules $31_i$ sur la figure 3a, consiste alors à réaliser une adaptation des paramètres d'un filtre de type LMS pour, en langage anglo-saxon, *"least mean square"*, afin de calculer l'erreur servant à l'adaptation des coefficients d'un filtre adaptatif à descente de gradient stochastique. On comprend bien sûr que le filtre adaptatif est réalisé par l'ensemble des éléments multiplicateurs ou atténuateurs $30_i$, lesquels sont pilotés en permanence par chaque élément d'adaptation, ou module d'adaptation, $31_i$.

Le filtrage ainsi opéré est donc effectué en observant une seule entrée, le signal téléphonique numérique s(n).

Ainsi que des études théoriques antérieures l'ont montré, le spectre à long terme d'un signal de parole est sensiblement plat, c'est-à-dire qu'il est sensiblement constant sur toutes les fréquences. Des études théoriques ont également montré que la moyenne des logarithmes des densités spectrales sur un horizon suffisamment large présente une composante convolutive constante dans le signal observé, laquelle peut être assimilée à la contribution du canal de transmission.

Ainsi, l'association d'un signal de référence SR constitué par un signal à densité spectrale constante, le signal de référence constituant la référence pour le filtrage de type LMS grâce à un pas de gradient faible et approprié, permet d'identifier la contribution du canal de transmission et de compenser celle-ci.

Le filtrage adaptatif, de type filtrage LMS, est implanté dans le domaine spectral et appliqué sur les énergies en sortie du banc de filtres constitutif du circuit de filtrage en sous-bandes 2.

A l'observation de la figure 3a, on peut remarquer que :

- l'égalisation est alors basée sur le fait que la densité spectrale à long terme du signal téléphonique est fixe et presque plate,
- le filtrage adaptatif est appliqué directement dans le domaine spectral, c'est-à-dire filtrage par blocs et adaptation des paramètres du filtre adaptatif, c'est-à-dire des éléments $30_i$ d'atténuation à la fin de chaque fenêtre de signal.

Une telle implantation est généralement connue sous le nom de *"méthode par convolution circulaire"*. Une telle méthode n'est pas optimale en ce sens qu'elle implante une convolution circulaire dans un domaine temporel. Toutefois, elle apparaît moins coûteuse en temps de calcul que les méthodes optimales de filtrage fréquentiel ou en sous-bandes. En outre, on indique que ce type de filtrage ne prend pas en compte la phase du signal de parole, un tel paramètre n'étant pas utilisé en matière de reconnaissance automatique de la parole.

Les équations d'adaptation des paramètres du filtre optimal peuvent alors être établies de la façon ci-après.

En supposant que le signal téléphonique numérique s(n) est la convolution d'un signal de parole propre émis x(n) par un filtre représentant et identifiant le canal téléphonique w(n), on peut écrire :

$$s(n) = x(n)*w(n) \qquad (1)$$

Dans la relation précitée, le signe * représente l'opérateur de convolution.

Dans une optique de généralisation, les différentes équations ci-après sont développées dans l'espace spectral, l'espace des bandes filtres utilisés en relation avec la figure 3a étant un cas particulier.

En exprimant les densités spectrales de puissance des deux termes de la relation (1) précitée, on obtient pour chaque fenêtre du signal de parole :

$$S_s(f) = S_x(f)W^2(f) \qquad (2)$$

Dans la relation précitée, on indique que $S_s(f)$ et $S_x(f)$ représentent les densités spectrales de puissance de s(n) et x(n) respectivement, W(f) représentant la fonction de transfert du canal téléphonique dans l'espace de fréquence par l'opérateur FFT[w(n)].

Le filtre adaptatif de fonction de transfert H(f) est directement appliqué sur la densité spectrale de puissance de s(n), exprimée sous la forme $S_s(f)$, pour engendrer le spectre normalisé $S_n(f)$ exprimé sous la forme :

$$S_n(f) = S_s(f)H(f) = S_x(f)W^2(f)H(f). \qquad (3)$$

Le signal de référence SR présentant un spectre constant, de la forme R(f), l'erreur Err(f) pour chaque fenêtre du signal téléphonique numérique s'écrit alors :

$$Err(f) = R(f)-S_x(f)W^2(f)H(f). \qquad (4)$$

Le filtre optimal vers lequel le filtre adaptatif H(f) converge est le filtre qui minimise l'erreur quadratique moyenne dans chacune des bandes de fréquence de chaque sous-bande f. L'erreur quadratique moyenne en fonction de la fréquence s'exprime sous la forme :

$$EQM(f) = E[Err^2(f)]. \qquad (5)$$

Dans la relation précitée, on indique que l'expression $E[Err^2(f)]$ indique l'espérance mathématique du carré de l'erreur Err(f) précédemment citée.

Moyennant l'hypothèse d'un spectre à long terme de parole constant et d'une fonction de transfert W(f) constante sur un large horizon, le filtre optimal est alors celui qui minimise l'équation d'erreur quadratique moyenne pour toute valeur de f, c'est-à-dire pour l'ensemble des bandes de fréquence. Cette relation s'écrit :

$$EQM(f) = R^2(f) + \overline{S^2_x(f)}W^4(f)H^2(f) - 2R(f)\overline{S_x(f)}W^2(f)H(f). \qquad (6)$$

L'opération de minimisation de la relation 6 (précitée) permet alors d'écrire la fonction de transfert du filtre optimal sous forme de la relation :

$$H_{opt}(f) = \frac{R(f)\overline{S_x(f)}}{\overline{S^2_x}(f)} \ \frac{1}{W^2(f)} = Cte \ \frac{1}{W^2(f)}.$$

(7)

Cette relation montre bien que le filtre optimal compense l'effet du canal de transmission.

En outre, si l'on considère un signal de référence SR comme présentant un spectre R(f) comme ayant la même puissance que le signal téléphonique numérique, alors, l'expression $E[R(f)S_x(f)]$ tend à être égale à $E[S^2_x(f)]$ et le filtre optimal approche l'inverse du canal de transmission. La compensation est ainsi réalisée.

De manière particulièrement avantageuse, on indique que la puissance du signal de référence SR peut être modulée en fonction de la puissance du signal téléphonique de parole. Une telle modulation permet un meilleur fonctionnement du module d'égalisation aveugle tel que représenté en figure 3a. En effet, la puissance du signal en entrée varie selon le son prononcé, et ceci à chaque instant. Pour des pas d'adaptation fixes des modules d'adaptation, les modules $30_i$ de la figure 3a, le filtre ainsi formé a tendance à s'adapter pour transformer les sons les plus énergétiques à une densité spectrale constante si la précaution d'une telle modulation n'est pas réalisée. Le pas d'adaptation peut en outre varier en fonction de l'énergie dans la bande de fréquences considérée.

Une comparaison du mode opératoire précité, conforme à l'objet de la présente invention, à un mode de filtrage classique passe-haut ou de soustraction cepstrale montre que du point de vue des performances de reconnaissance, le mode opératoire, objet de la présente invention, est supérieur de manière significative sur certaines bases de données aux processus de l'état de l'art précité, ce qui valide bien entendu et justifie l'utilisation du procédé et du système, objets de la présente invention, pour des applications en reconnaissance automatique de la parole.

Le tableau ci-après présente les améliorations obtenues par rapport à une technique classique, la soustraction cepstrale, grâce au processus de filtrage proposé conformément au procédé et au système, objets de la présente invention. On indique que les améliorations en dernière colonne du tableau précité sont données en termes de réduction du taux d'erreur par rapport à la version de référence d'un système développé en France par le Centre National d'Etudes des Télécommunications et désigné par PHIL90. La fourchette indiquée à côté du taux d'erreur du système de base représente l'intervalle de confiance à 95%. On notera également que la soustraction cepstrale, même si celle-ci est performante, pose un problème d'implantation en ligne en temps réel, car elle se base sur l'estimation de la moyenne des vecteurs cepstraux dans le silence ou sur un large horizon de parole.

| Chiffres | Taux d'erreur | Réduction du taux d'erreur (amélioration) |
|---|---|---|
| Système de base | 0.83% [0.58-1.18] | |
| Soustraction cepstrale | 0.44% | 47% |
| Filtrage adaptatif | 0.41% | 51% |
| Trégor (nom de la base de données) | Taux d'erreur | Réduction du taux d'erreur (amélioration) |
| Système de base | 0.64% [0.52-0.79] | |
| Soustraction cepstrale | 0.52% | 18% |
| Filtrage adaptatif | 0.54% | 16% |
| NB2 (base des nombres à 2 chiffres 00-99) | Taux d'erreur | Réduction du taux d'erreur (amélioration) |
| Système de base | 4.42% [3.97-4.92] | |
| Soustraction cepstrale | 3.87% | 12% |
| Filtrage adaptatif | 3.75% | 15% |

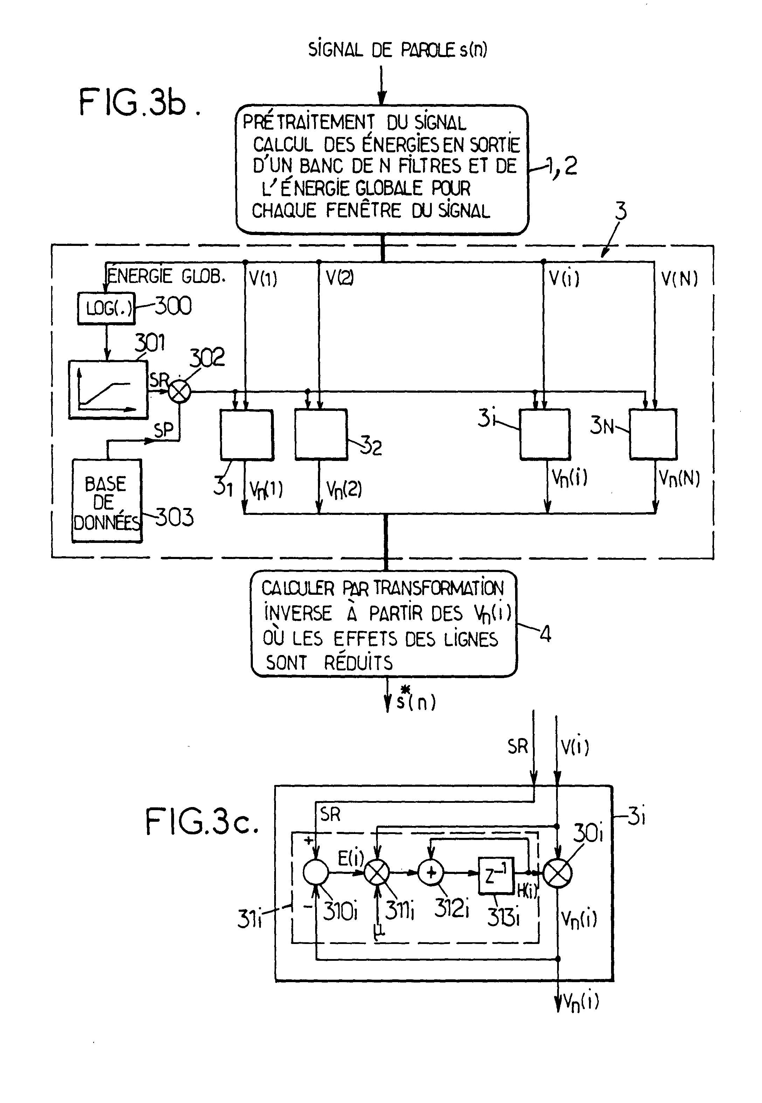

Un mode de réalisation avantageux du système de filtrage adaptatif d'un signal téléphonique numérique conforme à l'objet de la présente invention sera maintenant décrit en liaison avec les figures 3b et 3c, à titre de variante du système décrit en relation avec la figure 3a.

D'une manière générale, on indique, en liaison avec la figure 3b, que le système, objet de la présente invention, comprend, outre les circuits 1 et 2 de transformation fréquentielle et de filtrage en sous-bandes, un module de calcul de pré-traitement du signal téléphonique numérique s(n) et de calcul des énergies en sortie du banc de filtres ainsi que de l'énergie globale pour chaque fenêtre du signal de parole s(n). Sur la figure 3b, l'ensemble de ces éléments porte la référence 1,2 afin de ne pas surcharger le dessin.

En outre, dans le mode de réalisation particulier de la figure 3b, le circuit 3 comporte également un circuit de calcul, noté 300, du logarithme ou d'une puissance de l'énergie globale calculée dans le module 1,2 précédemment mentionné. Le circuit 300 précité est suivi d'un circuit de pondération 301 du logarithme de l'énergie globale, cette pondération étant effectuée en fonction de l'énergie globale du signal téléphonique numérique pour engendrer un signal de référence à densité spectrale constante.

Afin d'engendrer le signal de référence SR, on indique que le système selon l'invention, tel que représenté en figure 3b, peut comporter un circuit générateur de signal numérique spécifique SP à partir d'une base de données 303, cette base de données étant spécifique au type de communications véhiculées par le signal téléphonique numérique. Un circuit modulateur 302 est prévu, ce circuit modulateur permettant d'effectuer une modulation du signal de référence à densité spectrale constante par le signal numérique spécifique SP pour engendrer un signal de référence basé sur des statistiques à long terme sur le signal téléphonique. De manière générique, le signal de référence basé sur des statistiques à long terme sur le signal téléphonique porte également la référence SR.

Ainsi qu'on l'observera sur la figure 3b, chaque signal élémentaire $V_i$ est soumis alors à un traitement de filtrage adaptatif par un module de filtrage adaptatif $3_i$ correspondant à partir du signal de référence SR, modulé ou non par la base de données 303, chaque module de filtrage adaptatif $3_i$ étant représenté et décrit de manière plus détaillée en figure 3c.

Ainsi que représenté sur la figure précitée, chaque module de filtrage adaptatif comprend, outre le circuit atténuateur $30_i$ représenté sur la figure 3a, recevant d'une part, le signal élémentaire ou signal en sous-bandes V(i) et d'autre part, la valeur d'atténuation adaptative H(i), un module d'adaptation, noté $31_i$ permettant de délivrer la valeur d'atténuation H(i) précitée.

Le module d'adaptation $31_i$ comprend, ainsi que représenté en figure 3c, un circuit soustracteur $310_i$ recevant sur son entrée positive le signal de référence SR et sur son entrée négative le signal en sous-bandes filtré $V_{n(i)}$ délivré par le circuit atténuateur $30_i$. Le circuit soustracteur $310_i$ délivre le signal d'erreur Err(i). Le module d'adaptation $31_i$ comporte en outre un circuit multiplicateur $311_i$ recevant sur une première entrée le signal élémentaire, ou signal en sous-bandes V(i), sur une deuxième entrée un paramètre de pas d'adaptation de filtrage adaptatif, ce paramètre étant noté $\mu$ et sur une troisième entrée le signal d'erreur Err(i) précédemment mentionné. Le module d'adaptation $31_i$ délivre une valeur d'adaptation à un circuit de type intégrateur formé par un sommateur $312_i$ et un élément de retard d'une durée de fenêtre du signal téléphonique numérique, cet élément de retard portant la référence $313_i$ et étant rebouclé sur une entrée du circuit sommateur $312_i$. La sortie de l'élément de retard $313_i$ délivre la valeur adaptative d'atténuation ou de filtrage H(i) précédemment citée au circuit atténuateur, ou multiplicateur, $30_i$.

Enfin, ainsi que représenté en figure 3b, le système de filtrage adaptatif, objet de la présente invention, peut comporter un circuit 4 de transformation fréquentielle inverse recevant les signaux en sous-bandes filtrés $V_n(1)$, $V_n(i)$ à $V_n(N)$ délivrés par le circuit 3 de filtrage adaptatif, le circuit 4 de transformation fréquentielle inverse délivrant ainsi un signal téléphonique numérique égalisé, noté s*(n) dans lequel la composante de canal a été réduite par déconvolution aveugle.

On a ainsi décrit un procédé et un système de filtrage adaptatif d'un signal téléphonique numérique particulièrement performants dans la mesure où, par rapport aux techniques antérieures mettant en oeuvre la soustraction cepstrale, une amélioration significative du filtrage est ainsi obtenue.

## Revendications

**1.** Procédé de filtrage adaptatif d'un signal numérique (s(n)) à partir d'un signal de référence (SR) basé sur des statistiques à long terme sur le signal numérique, ce procédé consistant d'abord à soumettre ledit signal numérique à une transformation fréquentielle, de type FFT,

   **caractérisé en ce que** le signal numérique est du type téléphonique, et **en ce que** ladite étape de transformation fréquentielle est immédiatement suivie d'une étape consistant à soumettre ledit signal téléphonique transformé (sf(n)) à un filtrage en sous-bandes pour engendrer une pluralité de signaux en sous-bandes ($SB_1$,..., $SB_i$, ..., $SB_N$) qui sont ensuite chacun soumis à l'étape de filtrage adaptatif, ledit signal de référence utilisé étant constitué par un signal à densité spectrale constante, ce qui permet d'effectuer une égalisation par déconvolution aveugle des effets des lignes téléphoniques de transmission sur ledit signal téléphonique numérique.

**2.** Procédé selon la revendication 1, **caractérisé en ce que** celui-ci consiste en outre à soumettre ledit signal de référence à une modulation de puissance en fonction de la puissance dudit signal téléphonique numérique.

**3.** Procédé selon la revendication 1 ou la revendication 2, **caractérisé en ce que** ledit signal de référence est en outre modulé par un signal numérique engendré par une base de données spécifique au type de communication véhiculée par ledit signal téléphonique numérique.

**4.** Système de filtrage adaptatif d'un signal numérique, comprenant :

- des moyens de transformation fréquentielle (1), par traitement FFT,
- des moyens générateurs d'un signal de référence basé sur des statistiques à long terme sur le signal numérique,
- et des moyens de filtrage adaptatif (3) du signal numérique à partir dudit signal de référence,

**caractérisé en ce que** le signal numérique (s(n)) est du type téléphonique, et **en ce que** le système comprend en outre des moyens de filtrage en sous-bandes (2) pour engendrer une pluralité de signaux en sous-bandes ($SB_1$,..., $SB_i$, ..., $SB_N$), à partir dudit signal téléphonique transformé (sf(n)), lesdits moyens de filtrage adaptatif étant conçus pour filtrer chacun des signaux en sous-bandes à partir dudit signal de référence constitué par un signal à densité spectrale constante, afin de délivrer des signaux en sous-bandes filtrés ($V_1$, ..., $V_i$, ..., $V_N$), ce qui permet d'effectuer une égalisation par déconvolution aveugle des effets des lignes téléphoniques de transmission sur ledit signal téléphonique numérique.

**5.** Système selon la revendication 4, **caractérisé en ce que** lesdits moyens générateurs d'un signal de référence comportent au moins :

- des moyens de calcul (300) de l'énergie globale dudit signal téléphonique numérique et du logarithme ou d'une puissance de cette énergie, et
- des moyens de pondération (301) du logarithme ou d'une puissance de cette énergie, en fonction de l'énergie globale du signal téléphonique numérique (s(n)) pour engendrer ledit signal de référence à densité spectrale constante.

**6.** Système selon la revendication 5, **caractérisé en ce que** lesdits moyens générateurs d'un signal de référence comportent en outre :

- un générateur de signal numérique spécifique (SP) à partir d'une base de données (303) spécifique au type de communication véhiculée par le signal téléphonique numérique,
- un circuit modulateur (302) du signal de référence à densité spectrale plate par ledit signal numérique spécifique, pour engendrer ledit signal de référence basé sur des statistiques à long terme sur le signal téléphonique.

**7.** Système selon l'une des revendications 4 à 6, **caractérisé en ce que** lesdits moyens de filtrage adaptatif comprennent pour chaque signal en sous-bande, délivrant ledit signal en sous-bande filtré :

- un circuit soustracteur ($310_i$) recevant sur son entrée positive ledit signal de référence (SR) et sur son entrée négative ledit signal en sous-bande filtré correspondant, et délivrant un signal d'erreur (Err(i)),
- un circuit multiplicateur ($311_i$) recevant sur une première entrée ledit signal en sous-bande, sur une deuxième entrée un paramètre ($\mu$) de pas d'adaptation du moyen de filtrage adaptatif sur une troisième entrée le signal d'erreur, et délivrant une valeur d'adaptation,
- un circuit intégrateur ($312_i$) recevant en entrée ladite valeur d'adaptation et délivrant en sortie la valeur de coefficient de filtrage adaptatif,
- un circuit multiplicateur ($30_i$) recevant sur une première entrée ledit signal en sous-bande et sur une deuxième entrée ladite valeur de coefficient de filtrage adaptatif et délivrant ledit signal en sous-bande filtré.

**8.** Système selon l'une des revendications 4 à 7, **caractérisé en ce qu'**il comporte en outre des moyens de transformation fréquentielle inverse (4) recevant lesdits signaux en sous-bandes filtrés et délivrant un signal téléphonique numérique égalisé (s*(n)), dans lequel la composante de canal a été réduite par déconvolution aveugle.

**9.** Utilisation d'un procédé selon l'une quelconque des revendications 1 à 3 et d'un système de filtrage adaptatif selon l'une quelconque des revendications 4 à 8.


**Patentansprüche**

**1.** Verfahren zur adaptiven Filterung eines digitalen Signals (s(n)) mittels eines auf Langzeitstatistiken des digitalen Signals beruhenden Bezugssignals (SR), wobei dieses Verfahren zunächst darin besteht, das digitale Signal einer Frequenztransformation vom FFT-Typ zu unterwerfen,

**dadurch gekennzeichnet, dass** das digitale Signal ein Telefonsignal ist und dass auf den Schritt der Frequenztransformation unmittelbar ein Schritt folgt, der darin besteht, das transformierte Telefonsignal (sf(n)) einer Teilbandfilterung zu unterwerfen, um eine Mehrzahl von Teilbandsignalen ($SB_1$, ..., $SB_i$, ..., $SB_N$) zu erzeugen, von denen jedes anschließend dem Schritt der adaptiven Filterung unterworfen wird, wobei das verwendete Bezugssignal von einem Signal konstanter spektraler Dichte gebildet wird, was es erlaubt, eine Entzerrung durch blinde Ent-Faltung der Effekte der Telefonübertragungsleitungen auf das digitale Telefonsignal zu bewirken.

2. Verfahren nach Anspruch 1, **dadurch gekennzeichnet, dass** es ferner darin besteht, das Bezugssignal einer Leistungsmodulation in Abhängigkeit von der Leistung des digitalen Telefonsignals zu unterwerfen.

3. Verfahren nach Anspruch 1 oder Anspruch 2, **dadurch gekennzeichnet, dass** das Bezugssignal ferner mit einem digitalen Signal moduliert wird, welches durch eine Datenbasis erzeugt wird, die für die Art der von dem digitalen Telefonsignal transportierten Nachrichten spezifisch ist.

4. System zur adaptiven Filterung eines digitalen Signals, umfassend:

   - Mittel (1) zur Frequenztransformation durch FFT-Verarbeitung,
   - Mittel zur Erzeugung eines auf Langzeitstatistiken des digitalen Signals beruhenden Bezugssignals,
   - sowie Mittel (3) zur adaptiven Filterung des digitalen Signals mittels des Bezugssignals,

   **dadurch gekennzeichnet, dass** das digitale Signal (s(n)) ein Telefonsignal ist und dass das System ferner Mittel (2) zur Teilbandfilterung umfasst, um aus dem transformierten Telefonsignal (sf(n)) eine Mehrzahl von Teilbandsignalen ($SB_1$, ..., $SB_i$, ..., $SB_N$) zu erzeugen, wobei die Mittel zur adaptiven Filterung dazu vorgesehen sind, jedes der Teilbandsignale mittels des von einem Signal konstanter spektraler Dichte gebildeten Bezugssignals zu filtern, um so gefilterte Teilbandsignale ($V_1$, ..., $V_i$, ..., $V_N$) bereitzustellen, was es erlaubt, eine Entzerrung durch blinde Ent-Faltung der Effekte der Telefonübertragungsleitungen auf das digitale Telefonsignal zu bewirken.

5. System nach Anspruch 4, **dadurch gekennzeichnet, dass** die Mittel zur Erzeugung eines Bezugssignals zumindest umfassen:

   - Mittel (300) zur Berechnung der Gesamtenergie des digitalen Telefonsignals und des Logarithmus oder einer Leistung dieser Energie sowie
   - Mittel (301) zur Wichtung des Logarithmus oder einer Leistung dieser Energie in Abhängigkeit von der Gesamtenergie des digitalen Telefonsignals (s(n)), um das Bezugssignal konstanter spektraler Dichte zu erzeugen.

6. System nach Anspruch 5, **dadurch gekennzeichnet, dass** die Mittel zur Erzeugung eines Bezugssignals ferner umfassen:

   - einen Generator zur Erzeugung eines speziellen digitalen Signals (SP) mittels einer Datenbasis (303), welche für die Art der von dem digitalen Telefonsignal transportierten Nachrichten spezifisch ist,
   - eine Modulatorschaltung (302) zur Modulation des Bezugssignals gleichmäßiger spektraler Dichte mit dem speziellen digitalen Signal, um das auf Langzeitstatistiken des Telefonsignals beruhende Bezugssignal zu erzeugen.

7. System nach einem der Ansprüche 4 bis 6, **dadurch gekennzeichnet, dass** die Mittel zur adaptiven Filterung für jedes Teilbandsignal — das gefilterte Teilbandsignal bereitstellend — umfassen:

   - eine Subtraktionsschaltung ($310_i$), welche an ihrem positiven Eingang das Bezugssignal (SR) und an ihrem negativen Eingang das entsprechende gefilterte Teilbandsignal erhält und ein Fehlersignal (Err(i)) bereitstellt,
   - eine Multiplikationsschaltung ($311_i$), welche an einem ersten Eingang das Teilbandsignal, an einem zweiten Eingang einen Parameter ($\mu$) für die Adaptionsschrittweite der Mittel zur adaptiven Filterung und an einem dritten Eingang das Fehlersignal erhält und einen Adaptionswert bereitstellt,
   - eine Integrationsschaltung ($312_i$), welche am Eingang den Adaptionswert erhält und am Ausgang den Wert des Koeffizienten der adaptiven Filterung bereitstellt,
   - eine Multiplikationsschaltung ($30_i$), welche an einem ersten Eingang das Teilbandsignal und an einem zweiten Eingang den Wert des Koeffizienten der adaptiven Filterung erhält und das gefilterte Teilbandsignal bereitstellt.

8. System nach einem der Ansprüche 4 bis 7, **dadurch gekennzeichnet, dass** es ferner Mittel (4) zur inversen Frequenztransformation umfasst, welche die gefilterten Teilbandsignale erhalten und ein entzerrtes digitales Telefonsignal (s*(n)) bereitstellen, dessen Kanalbestandteil durch blinde Ent-Faltung reduziert worden ist.

9. Verwendung eines Verfahrens nach einem der Ansprüche 1 bis 3 und eines Systems zur adaptiven Filterung nach einem der Ansprüche 4 bis 8.

**Claims**

1. A process of adaptive filtering of a digital signal (s(n)) from a reference signal (SR) based on long-term statistics on the digital signal, said process consisting first in submitting said digital signal to a frequency transformation, of FFT type,
   **characterized in that** the digital signal is of the telephone type, and **in that** said step of frequency transformation is immediately followed by a step consisting in submitting said transformed telephone signal (sf(n)) to a sub-band filtering to generate a plurality of sub-band signals ($SB_1$, ..., $SB_i$, ... $SB_N$) which are then each submitted to the step of adaptive filtering, said used reference signal consisting of a signal of constant spectral density, thereby allowing to perform equalization by blind deconvolution of the effects of the telephone transmission lines on said digital telephone signal.

2. The process of Claim 1, **characterized in that** it further consists in submitting said reference signal to a power modulation as a function of the power of said digital telephone signal.

3. The process of Claim 1 or 2, **characterized in that** said reference signal is further modulated by a digital signal produced by a database specific to the type of communication carried by said digital telephone signal.

4. A system for adaptive filtering of a digital signal, comprising:

   - means of frequency transformation (1), by FFT processing,
   - means for generating a reference signal based on long-term statistics on the telephone signal,
   - and means of adaptive filtering (3) of the digital signal from said reference signal,

   **characterized in that** the digital signal is of the telephone type, and in the system further comprises sub-band filtering means (2) to generate a plurality of sub-band signals ($SB_1$, ..., $SB_i$, ... $SB_N$) from said transformed telephone signal (sf(n)), said adaptive filtering means being arranged to filter each of the sub-band signals from said reference signal consisting of a signal of constant spectral density so as to output filtered sub-band signals ($V_1$, ..., $V_i$, ..., $V_N$), thereby allowing to perform equalization by blind deconvolution of the effects of the telephone transmission lines on said digital telephone signal.

5. The system of Claim 4, **characterized in that** said means for generating a reference signal include at least:

   - means (300) for calculating the global energy of said digital telephone signal and the logarithm or a power of this energy, and
   - means (301) for weighting the logarithm or a power of this energy, as a function of the global energy of the digital telephone signal (s(n)) to generate said reference signal of constant spectral density.

6. The system of Claim 5, **characterized in that** said means for generating a reference signal further include:

   - a generator of a specific digital signal (SP) from a database (303) specific to the type of communication carried by the digital telephone signal,
   - a circuit (302) modulating the reference signal of flat spectral density by said specific digital signal, to generate said reference signal based on long-term statistics on the telephone signal.

7. The system of any one of Claims 4 to 6, **characterized in that** said adaptive filtering means comprise for each sub-band signal, delivering said filtered sub-band signal:

   - a subtractor circuit ($310_i$) receiving on its positive input said reference signal (SR) and on its negative input said corresponding filtered sub-band signal, and delivering an error signal (Err(i)),

- a multiplier circuit ($311_i$) receiving on a first input said sub-band signal, on a second input an adaptation step parameter ($\mu$) of the adaptive filtering means, on a third input said error signal, and delivering an adaptation value,
- an integrator circuit ($312_i$) receiving as input said adaptation value and delivering as output the value of adaptive filtering coefficient,
- a multiplier circuit ($30_i$) receiving on a first input said sub-band signal and on a second input said value of adaptive filtering coefficient and delivering said filtered sub-band signal.

8. The system of any one of Claims 4 to 7, **characterized in that** it further comprises means of inverse frequency transformation (4) receiving said filtered sub-band signals and delivering an equalized digital telephone signal (s* (n)), in which the channel component has been reduced by blind deconvolution.

9. Use of a process according to any one of claims 1 to 3 and of an adaptive filtering system according to any one of claims 4 to 8.

EP 0 692 883 B1

FIG.1a. PRINCIPE DE CALCUL DU CEPSTRE
(ART ANTERIEUR)

FIG.1b. PRINCIPE GÉNÉRAL D'UN ÉGALISEUR AUTODIDACTE
(AVEUGLE) UTILISÉ EN TRANSMISSION NUMÉRIQUE
(ART ANTÉRIEUR)

## FIG.2.

## FIG.3a. ÉGALISATION AVEUGLE DES EFFETS DES LIGNES TÉLÉPHONIQUES

**FIG.3b.**

SIGNAL DE PAROLE s(n)

PRÉTRAITEMENT DU SIGNAL
CALCUL DES ÉNERGIES EN SORTIE
D'UN BANC DE N FILTRES ET DE
L'ÉNERGIE GLOBALE POUR
CHAQUE FENÊTRE DU SIGNAL — 1,2

ÉNERGIE GLOB.   V(1)   V(2)   V(i)   V(N)   3

LOG(.) — 300

301   302   SR

SP

BASE DE DONNÉES — 303

$3_1$   $3_2$   $3i$   $3N$

$V_n(1)$   $V_n(2)$   $V_n(i)$   $V_n(N)$

CALCULER PAR TRANSFORMATION
INVERSE À PARTIR DES $V_n(i)$
OÙ LES EFFETS DES LIGNES
SONT RÉDUITS — 4

$s^*(n)$

SR   V(i)

**FIG.3c.**

SR   $3i$

$+$   E(i)   $30i$

$Z^{-1}$   H(i)

$31i$   $310i$   $311i$   $312i$   $313i$   $V_n(i)$

$V_n(i)$